# EUROPEAN PATENT APPLICATION

(11) **EP 3 270 276 A1**
(43) Date of publication of application: **17.01.2018**
(21) Application number: 17185494.6
(22) Date of filing: 02.08.2010
(51) Int. Cl.: G06F 3/048, H04M 1/725, G06F 3/0482, G06F 3/0488, H04N 5/44, H04N 21/422, G08C 17/02

(54) **PORTABLE DEVICE AND CONTROL METHOD THEREOF**

(30) Priority: 15.03.2010 KR 20100022920
(62) Divisional of application: 10171590.2
(71) Applicant: Samsung Electronics Co., Ltd., Gyeonggi-do 16677 (KR)
(72) Inventor: KIM, Joo-youn, Seoul (KR); KWON, Yong-hwan, Gyeonggi-do (KR); YOON, Yeo-ri, Gyeonggi-do (KR)
(74) Representative: Appleyard Lees IP LLP

(57) **Abstract**

A portable device (100) comprises a communication unit (110) configured to communicate with an external device (200); a touch screen (120) configured to display a user interface, UI, and detect a user's touch; and a controller (130) configured to: if the user' touch is static touch inputs, perform an operation for the UI at an area touched by the user's touch on the touch screen (120) of the portable device (100), if the user' touch is successive touch inputs, send a signal for controlling the external device (200), wherein the signal comprises information of a direction of the successive touch inputs with respect to the user.

## Description

### BACKGROUND

### Field

Apparatuses and methods consistent with the exemplary embodiments relate to a portable device and a control method thereof, and more particularly, to a portable device with a touch screen and a control method thereof, which can control an external device.

### Description of the Related Art

A user interface (UI) capable of controlling an electronic device trends has a tendency to use a touch screen. With this, a remote controller capable of controlling an external device such as a television (TV), a set-top box (STB), etc. has also included the touch screen.

However, in the case of the remote controller including the touch screen, a user has to select a certain graphic user interface (GUI) while alternately checking a screen of the external device and the GUI included in the touch screen of the remote controller in order to control the external device. Thus, it is inconvenient for a user.

### SUMMARY

Accordingly, one or more exemplary embodiments provide a portable device with a touch screen and a control method thereof, which is convenient to control an external device.

An aspect of an exemplary embodiment is to provide a portable device with a touch screen and a control method thereof, which can execute at least one UI menu included in the touch screen or control an external device by determining a user's touch input.

An aspect of another exemplary embodiment is to provide a portable device and a control method thereof, which can determine a direction of a user's touch input and transmit a control signal corresponding to the touch input to an external device, so that he/she can control the external device without necessarily viewing a touch screen provided in the portable device.

The foregoing and/or other aspects may be achieved by providing a portable device including: a communication unit which communicates with an external device; a touch screen which includes at least one user interface (UI) menu and detects a plurality of touch inputs of a user; and a controller which determines whether the plurality of touch inputs of the user successively detected by the touch screen correspond to a static touch or a dynamic touch according to whether a first position of a touch start and a second position of a touch termination are the same, performs an operation corresponding to the first and second positions on the at least one UI menu if the plurality of successively detected touch inputs correspond to the static touch wherein the first and second positions are the same, and controls the communication unit to send the external device a control signal corresponding to the dynamic touch if the successive touch inputs correspond to the dynamic touch wherein the first and second positions are different.

The controller may determine whether the successive touch inputs correspond to the static touch or the dynamic touch based on at least one of a distance between the first position and the second position and a time between the touch start of the first position to the touch termination of the second position.

The portable device may further include a sensor to detect a direction of a touching operation with respect to a user, wherein the controller controls the communication unit to send the external device a control signal corresponding to the direction of the touching operation detected by the sensor if the plurality of touch inputs by the user correspond to the dynamic touch.

The direction of the touching operation may include one of up, down, left and right directions.

The external device may include a broadcasting receiver.

The control signal corresponding to the direction of the touching operation may include a control signal corresponding to one among channel change, volume control and menu selection of the broadcasting receiver.

The controller may control the communication unit to send the broadcasting receiver a control signal for maintaining operation corresponding to a dynamic touch if a touch input determined as the dynamic touch is maintained for a predetermined time.

Another aspect can be achieved by providing a method of controlling a portable device, comprising: detecting a plurality of touch inputs of a user through a touch screen which includes at least one user interface (UI) menu and detects the plurality of touch inputs of the user; determining whether the plurality of touch inputs of the user successively detected by the touch screen correspond to a static touch or a dynamic touch according to whether a first position of a touch start and a second position of a touch termination are the same; performing an operation corresponding to the first and second positions on the at least one UI menu if the plurality of successively detected touch inputs correspond to the static touch wherein the first and second positions are the same; and sending a control signal to an external device corresponding to the dynamic touch if the successive touch inputs correspond to the dynamic touch wherein the first and second positions are different.

The determining the plurality of touch inputs of the user successively detected by the touch screen correspond to a static touch or a dynamic touch may include determining whether the plurality of touch inputs correspond to the static touch or the dynamic touch based on at least one of a distance between the first position and the second position and a time between the touch start of the first position to the touch termination of the second position.

The method may further include detecting a direction of a touching operation with respect to a user, wherein the sending the external device the control signal includes sending the external device a control signal corresponding to the direction of the detected touching operation if the plurality of touch inputs by the user correspond to the dynamic touch.

The direction of the touching operation may include one of up, down, left and right directions.

The external device may include a broadcasting receiver.

The control signal corresponding to the direction of the touching operation may include a control signal corresponding to one among channel change, volume control and menu selection of the broadcasting receiver.

The sending the external device the control signal may include sending the broadcasting receiver a control signal for maintaining operation corresponding to a dynamic touch if a touch input determined as the dynamic touch is maintained for a predetermined time.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a schematic view of a portable device system according to an exemplary embodiment;
FIG. 2 is a control block diagram of a portable device according to an exemplary embodiment;
FIGS. 3 and 4 show dynamic touches according to an exemplary embodiment;
FIG. 5 shows successive key inputs after the dynamic touch according to an exemplary embodiment; and
FIG. 6 is a flowchart showing control operation of a portable device according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout. Expressions such as "at least one of," when preceding a list of elements, modify the entire list of elements and do not modify the individual elements of the list.

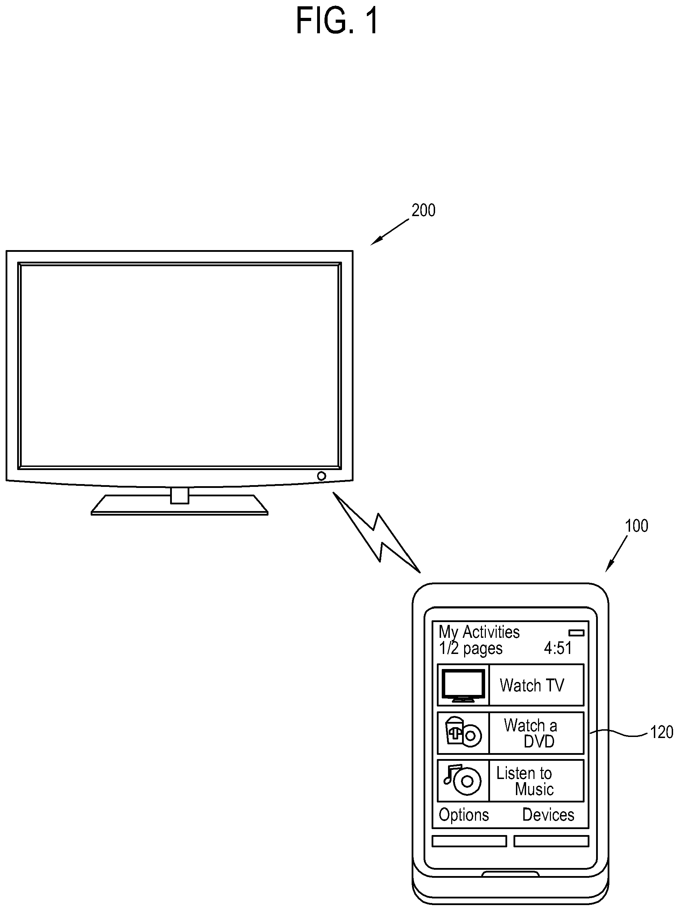

FIG. 1 is a schematic view of a portable device system according to an exemplary embodiment. As shown therein, the portable device system includes a portable device 100 and an external device 200.

The portable device 100 and the external device 200 are connected through a predetermined communication unit, and various control signals are transmitted and received through the communication unit. The portable device 100 in this exemplary embodiment transmits a control signal corresponding to a user's predetermined touch input to the external device 200, and the external device 200 performs an operation corresponding to the control signal.

The portable device 100 may include any portable electronic device which has a touch screen. For example, the portable device 100 may include a remote controller, a smart phone, a personal digital assistant (PDA), a portable multimedia player (PMP), etc. each of which includes the touch screen.

The portable device 100 determines a user's touch input, and executes at least one user interface (UI) menu included in the touch screen or transmits a control signal to the external device 200 according to determined results.

The external device 200 may be achieved by a television that processes a broadcasting signal and displays it on a display screen. In the case that the television is used as the external device 200, the external device 200 may include an Internet protocol television (IPTV) connected to the portable device 100 through an Internet protocol (IP). Besides, the external device 200 may be achieved by a set-top box (STB) having no display screen.

The external device 200 may perform an operation corresponding to a control signal transmitted from the portable device 100.

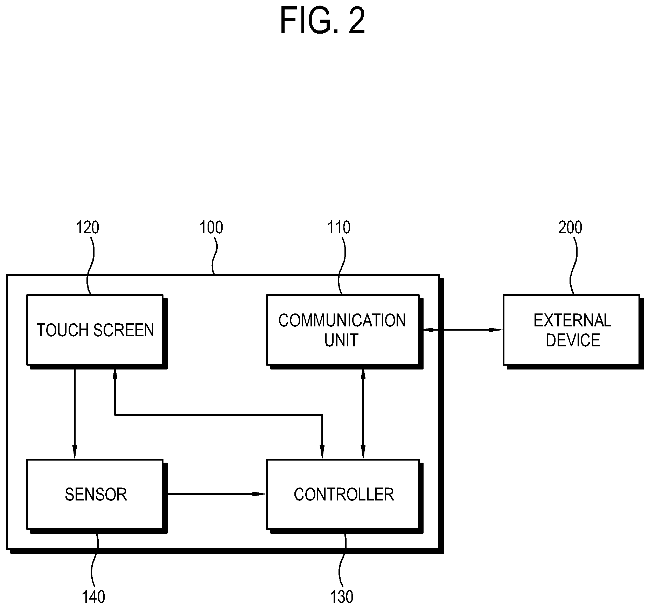

Below, the portable device 100 will be described in more detail with reference to FIG. 2.

As shown in Fig. 2, the portable device 100 includes a communication unit 110, a touch screen 120, a controller 130 and a sensor 140.

The communication unit 110 communicates with the external device 200 and transmits a control signal corresponding to a user's touch input to the external device 200. Here, the communication unit 110 communicates with the external device 200 through a radio frequency (RF) signal, a wired/wireless local area network (LAN) (particularly, Wi-Fi), Bluetooth, ZigBee, etc., instead of through an infrared (IR) signal.

The touch screen 120 includes at least one UI menu, and senses a user's touch input.

At least one UI menu included in the touch screen may be achieved as follows. According to an exemplary embodiment, if the portable device is a remote controller having a touch screen, the at least one UI menu may include a UI menu for controlling the external device 200. For example, if the external device is a broadcasting receiver, the at least one UI menu on the touch screen may include a UI for selecting a menu of the broadcasting receiver; a UI for connecting a bluray disc (BD) and/or digital versatile disc (DVD) player with the broadcasting receiver; a UI for reproducing contents such as a moving picture, an MP3, a picture, etc.; a UI for setting up picture quality, sound, channel lists, etc.; a UI for changing a channel or controlling a volume; and a UI corresponding to items such as up, down, numerals, etc. included in a general remote controller.

According to another exemplary embodiment, if the portable device is a smart phone having a touch screen, the at least one UI menu on the touch screen may include a UI for a telephone call; a UI for short message service (SMS) /multimedia messaging service; a UI for connecting to Internet; a UI for reproducing an MP3/a moving picture; a UI for setting up the smart phone; a UI for executing other various applications; etc. as a smart phone's own UI menu.

Also, the touch screen 120 senses, i.e., detects, a touch input of a user.

Here, the touch screen 120 includes any touch screen which can sense the touch input of a user. For example, the touch screen 120 may include a resistive touch screen, a surface resistive touch screen or a capacitive touch screen. Thus, the touch screen senses a position and/or time in the successive touch inputs of a user's touch start and termination and transmits it to the controller 130.

The controller 130 determines whether a user's successive touch inputs sensed by the touch screen 120 are a static touch or a dynamic touch according to whether a first position corresponding to the touch start and a second position corresponding to the touch termination are the same. As a result of determination, if the user's successive touch inputs are the static touch, wherein the two positions are the same, the controller 130 performs operation of the at least one UI menu corresponding to the touch position. On the other hand, if the user's successive touch inputs are the dynamic touch, wherein the two positions are different, the controller 130 controls the communication unit 110 to transmit a control signal corresponding to the dynamic touch to the external device.

The controller 130 receives information about coordinate distance and/or time between the first position of the touch start and the second position of the touch termination sensed on the touch screen 120. On the basis of the received information, the controller 130 determines whether the first position and the second position are the same or not.

The static touch wherein the first position and the second position are the same includes the two positions having the same coordinates on the touch screen, or the two positions being within an area occupied with the UI menu on the touch screen. Also, if it is determined that the coordinate distance between the first position and the second position is within a predetermined distance range, the two positions are regarded as the same.

Also, if it is determined that the time between the touch start of the first position and the touch termination of the second position is within a predetermined time range, the two positions are regarded as the same.

Thus, the controller 130 determines the user's successive input as the static touch if the first and second positions are the same, and as the dynamic touch if the first and second positions are not the same.

In the case where the user's successive touch inputs are determined as the static touch, the controller 130 implements an operation corresponding to at least one menu provided on the touch screen.

For example, if the portable device 100 according to an exemplary embodiment is achieved by a remote controller with a touch screen including UI menus for controlling the external device 200 and the external device 200 is achieved by a TV, the controller 130 transmits a control signal for connection with the DVD player to the TV when a user's successive touch inputs are determined as the static touch and the UI menu corresponding to the touching position is determined to be the UI for the connection with the DVD player.

For example, if the portable device 100 according to another exemplary embodiment is achieved by a smart phone with a touch screen including UI menus for a plurality of applications, the controller 130 performs an SMS operation corresponding to the UI for SMS when a user's successive touch inputs are determined as the static touch and the UI menu corresponding to the touching position is determined to be the UI for the SMS.

On the other hand, if a user's successive touch inputs are determined as the dynamic touch, the controller 130 regards the successive touch inputs as a signal for controlling the external device 200 and controls the communication unit 110 to transmit a control signal corresponding to the dynamic touch to the external device 200.

Here, if a coordinate distance on the touch screen 120 between the first position corresponding to the touch start and the second position corresponding to the touch termination is longer than a predetermined distance range or a time between the two positions is longer than a predetermined time range in accordance with a user's successive touch inputs, the controller 130 determines the touch to be the dynamic touch.

Meanwhile, the portable device 100 according to an exemplary embodiment may further include the sensor 140 for sensing a direction of a touching operation with respect to a user. For example, the sensor 140 for sensing the direction of the touching operation with respect to a user may be achieved by a gyroscope or the like.

Thus, when a user's successive touch inputs are determined as the dynamic touch, the controller 130 receives information about a direction of a touching operation sensed by the sensor 140 and controls the communication unit 110 to transmit a control signal corresponding to the direction of the touching operation to the external device 200.

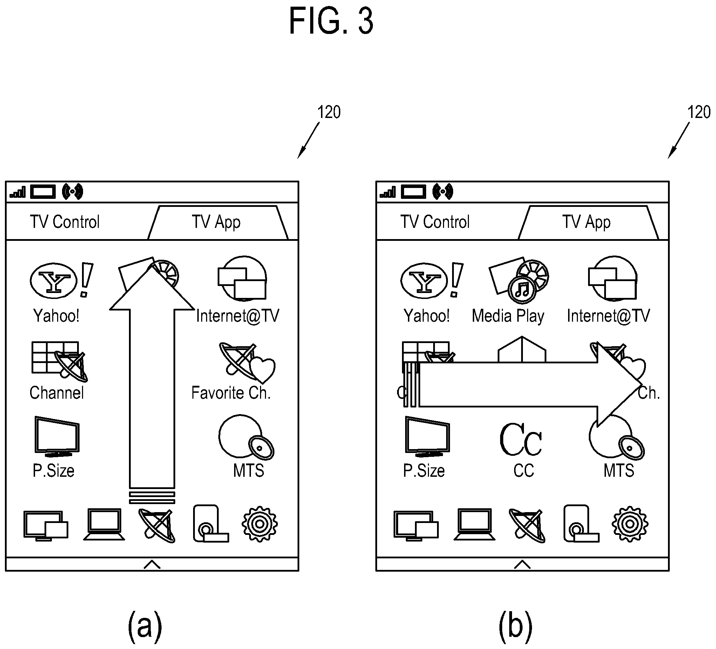

At this time, the direction of the touching operation may be one of up, down, left and right directions. Below, the direction of the touching operation will be described in more detail with reference to FIGS. 3 to 5.

As shown in (a) of FIG. 3, in the case where the touch screen is in a portrait orientation (e.g., a longer side of the touch screen being aligned vertically), if a user's successive touch inputs are determined as the dynamic touch with the first position of the touch start being close to a user and the second position of the touch termination being farther away from the user than the first position, it is determined that the touching operation is performed in a down-to-up direction.

On the other hand, if the first position and the second position are reversed, it is determined that the touching operation is performed in an up-to-down direction.

As shown in (B) of FIG. 3, in the case that the touch screen is in the portrait orientation, if a user's successive touch inputs are determined as the dynamic touch with the first position of the touch start being to the left with respect to a user and the second position of the touch termination being farther to the right than the first position, it is determined that the touching operation is performed in a left-to-right direction.

On the other hand, if the first position and the second position are reversed, it is determined that the touching operation is performed in a right-to-left direction.

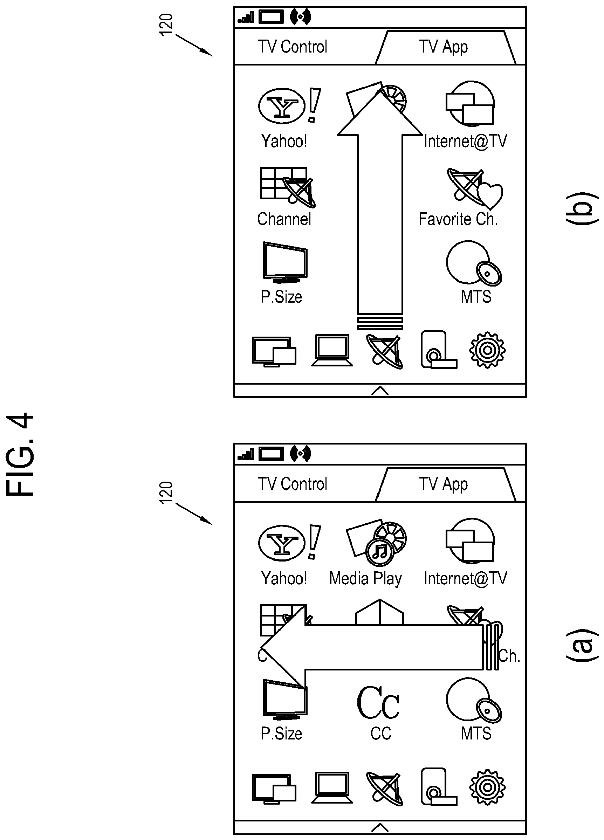

FIG. 4 clearly shows that the direction of the touching operation is not a direction with respect to the touch screen but a direction with respect to a user.

As opposed to (a) of FIG. 3 where the touch screen is in the portrait orientation, (a) of FIG. 4 shows that the touch screen is in a landscape orientation (e.g., a longer side of the touch screen being aligned horizontally). Although the touch screen is in the landscape orientation, if a user's successive touch inputs are determined as the dynamic touch with the first position of the touch start being close to a user and the second position of the touch termination being farther away from the user than the first position, it is determined that the touching operation is performed in the down-to-up direction. Thus, the controller 130 determines that the direction of the touching operation is the same as that shown in (a) of FIG. 3.

Likewise, as opposed to (B) of FIG. 3, (B) of FIG. 4 shows that the touch screen is in the landscape orientation. Nevertheless, if a user's successive touch inputs are determined as the dynamic touch with the first position of the touch start being to the left with respect to a user and the second position of the touch termination being farther to the right than the first position, it is determined that the touching operation is performed in the left-to-right direction. Thus, the controller 130 determines that the direction of the touching operation is the same as that shown in (B) of FIG. 3.

Accordingly, the portable device with the touch screen according to an exemplary embodiment is convenient for a user to transmit a control signal corresponding to a touching operation to the external device by only the touching operations of the up, down, left and right directions without viewing the touch screen, if the dynamic touch is performed to transmit the control signal to the external device.

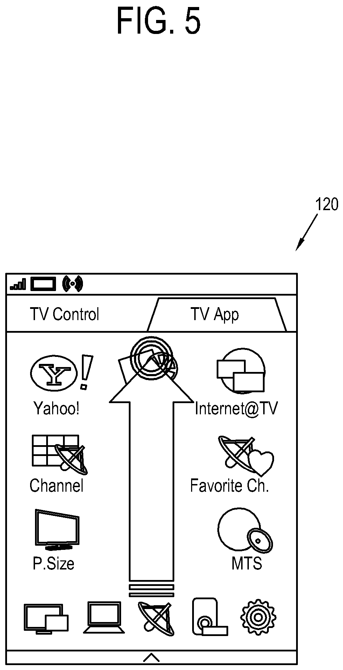

FIG. 5 shows an example of successive key inputs.

If a user's touch input determined as the dynamic touch is maintained for a predetermined time, the controller 110 controls the communication unit 110 to send the external device a control signal for maintaining an operation corresponding to the dynamic touch.

As shown therein, if a user's touch input determined as the dynamic touch of an upward direction is maintained for a predetermined time, the controller 130 controls the communication unit 110 to send the external device a control signal for maintaining an operation corresponding to the dynamic touch of the upward direction.

The touching operation will be described in more detail with reference to a specific embodiment.

Assume that the external device is a broadcasting receiver and the portable device is a remote controller or smart phone with a touch screen by way of example.

Further, assume that a control signal corresponding to a direction of a user's touching operation is a control signal corresponding to one of channel change, volume control and menu selection of the broadcasting receiver.

In the case that the broadcasting receiver displays an image corresponding to a certain channel and a user's successive touch inputs are determined as a dynamic touch, the controller 130 receives information about a touching direction sensed by the sensor for sensing a direction with respect to a user, and controls the communication unit 110 to transmit a control signal for changing a channel to the broadcasting receiver if the touching operation is performed in up and down directions with respect to a user. In other words, as shown in (a) of FIG. 3 or (a) of FIG. 4, if the touching operation is performed in the upward direction, the controller 130 controls the communication unit 110 to send the broadcasting receiver a control signal for changing to a channel higher by a channel number of '+1' than the certain channel.

Also, if the touching operation of the upward direction is maintained for a predetermined time as shown in FIG. 5, the controller 130 controls the communication unit 110 to send the broadcasting receiver a control signal for continuously changing from the certain channel to a higher channel.

Further, in the case that the broadcasting receiver displays an image corresponding to a certain channel and a user's successive touch inputs are determined as a dynamic touch of left and right directions with respect to a user, the controller 130 controls the communication unit 110 to send the broadcasting receiver a control signal for controlling volume. For example, as shown in (b) of FIG. 3 or (b) of FIG. 4, if the touching operation is performed in a right direction, the controller 130 controls the communication unit 110 to send the broadcasting receiver a control signal for increasing the volume by '+1'.

Also, if the touching operation of the right direction is maintained for a predetermined time as shown in FIG. 5, the controller 130 controls the communication unit 110 to send the broadcasting receiver a control signal for continuously increasing the volume.

Meanwhile, if the broadcasting receiver displays a menu setting image/electronic program guide (EPG) image and a user's successive touch inputs are determined as a dynamic touch, the controller 130 controls the communication unit 110 to send the broadcasting receiver a control signal corresponding to up, down, left and right keys for navigating the menu setting image/EPG image in accordance with a user's touching operation of up, down, left and right directions. That is, the controller 130 controls the communication unit 110 to send the broadcasting receiver a control signal corresponding to the up/down keys in response to the touching operation of the upward or downward direction as shown in (a) of FIG. 3 and (a) of FIG. 4, or a control signal corresponding to the left/right keys in response to the touching operation of the upward or downward direction as shown in (b) of FIG. 3 and (b) of FIG. 4.

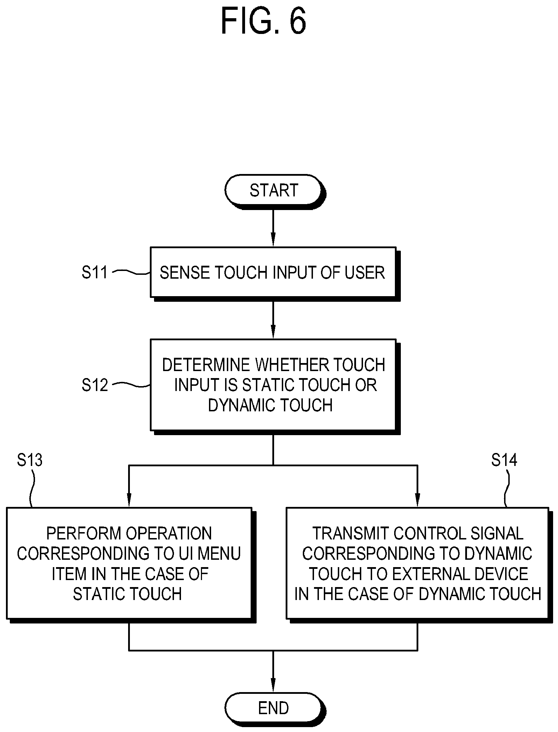

FIG. 6 is a flowchart showing control operation of a portable device according to an exemplary embodiment.

As shown therein, if a user's successive touch inputs are sensed through the touch screen at operation S11, it is determined that the successive touch inputs are the static touch or the dynamic touch according to whether or not the first position of the touch start and the second position of the touch termination are the same at operation S12. In result, if the user's successive touch inputs are the static touch that the first and second positions are the same, operation is performed corresponding to the at least one UI menu corresponding to the touch position at operation S13. On the other hand, if the user's successive touch inputs are the dynamic touch that the first and second positions are different, the user's successive touch inputs are determined as a signal for controlling the external device and the communication unit is controlled to send the external device a control signal corresponding to the dynamic touch at operation S14.

As described above, a portable device with a touch screen determines the kind of a user's touch input, and executes at least one UI menu included in the touch screen or transmits a signal for controlling an external device that communicates with the portable device.

In the case of sending the external device a control signal, a direction of a user's touch input is determined with respect to a user regardless of whether the touch screen is in a portrait orientation or a landscape orientation, so that the control signal can be transmitted corresponding to the direction of the touch input. Thus, since there is no need of viewing the touch screen of the portable device, it is convenient for a user to transmit a control signal to the external device while viewing an image displayed on the external device.

Although a few exemplary embodiments have been shown and described, it will be appreciated by those skilled in the art that changes may be made in these exemplary embodiments without departing from the principles and spirit of the invention, the scope of which is defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

The invention might include, and/or be defined by, the following aspects:
1. A portable device comprising:
   a communication unit which communicates with an external device;
   a touch screen which comprises at least one user interface (UI) menu and detects a plurality of touch inputs of a user;
   a controller which determines whether the plurality of touch inputs of the user successively detected by the touch screen correspond to a static touch or a dynamic touch according to whether a first position of a touch start and a second position of a touch termination are the same, performs an operation corresponding to the first and second positions on the at least one UI menu if the plurality of successively detected touch inputs correspond to the static touch wherein the first and second positions are the same, and controls the communication unit to send the external device a control signal corresponding to the dynamic touch if the successive touch inputs correspond to the dynamic touch wherein the first and second positions are different.
2. The portable device according to claim 1, wherein the controller determines whether the successive touch inputs correspond to the static touch or the dynamic touch based on at least one of a distance between the first position and the second position and a time between the touch start of the first position and the touch termination of the second position.
3. The portable device according to claim 1, further comprising a sensor to detect a direction of a touching operation with respect to the user,
   wherein the controller controls the communication unit to send the external device a control signal corresponding to the direction of the touching operation detected by the sensor if the plurality of touch inputs by the user correspond to the dynamic touch.
4. The portable device according to claim 3, wherein the direction of the touching operation comprises one of up, down, left and right directions.
5. The portable device according to claim 4, wherein the external device comprises a broadcasting receiver.
6. The portable device according to claim 5, wherein the control signal corresponding to the direction of the touching operation comprises a control signal corresponding to one among a channel change, a volume control and a menu selection of the broadcasting receiver.
7. The portable device according to claim 5, wherein the controller controls the communication unit to send the broadcasting receiver a control signal for a maintaining operation corresponding to the dynamic touch if the plurality of touch inputs corresponding to the dynamic touch are maintained for a predetermined time.
8. A method of controlling a portable device, comprising:
   detecting a plurality of touch inputs of a user through a touch screen which includes at least one user interface (UI) menu and detects the plurality of touch inputs of the user;
   determining whether the plurality of touch inputs of the user successively detected by the touch screen correspond to a static touch or a dynamic touch according to whether a first position of a touch start and a second position of a touch termination are the same;
   performing an operation corresponding to the first and second positions on the at least one UI menu if the plurality of successively detected touch inputs correspond to the static touch wherein the first and second positions are the same; and
   sending a control signal to an external device corresponding to the dynamic touch if the plurality of successively detected touch inputs correspond to the dynamic touch wherein the first and second positions are different.
9. The method according to claim 8, wherein the determining the plurality of touch inputs of the user successively detected by the touch screen correspond to the static touch or the dynamic touch comprises determining whether the plurality of touch inputs correspond to the static touch or the dynamic touch based on at least one of a distance between the first position and the second position and a time between the touch start of the first position and the touch termination of the second position.
10. The method according to claim 8, further comprising detecting a direction of a touching operation with respect to the user,
   wherein the sending the external device the control signal comprises sending the external device a control signal corresponding to the direction of the detected touching operation if the plurality of touch inputs by the user correspond to the dynamic touch.
11. The method according to claim 10, wherein the direction of the touching operation comprises one of up, down, left and right directions.
12. The method according to claim 11, wherein the external device comprises a broadcasting receiver.
13. The method according to claim 12, wherein the control signal corresponding to the direction of the touching operation comprises a control signal corresponding to one among a channel change, a volume control and a menu selection of the broadcasting receiver.
14. The portable device according to claim 5, wherein the sending the external device the control signal comprises sending the broadcasting receiver a control signal for a maintaining operation corresponding to the dynamic touch if the plurality of touch inputs corresponding to the dynamic touch are maintained for a predetermined time.

## Claims

1. A portable device (100) comprising:
a communication unit (110) configured to communicate with an external device (200);
a touch screen (120) configured to display a user interface, UI, and detect a user's touch; and
a controller (130) configured to:
if the user' touch is static touch inputs, perform an operation for the UI at an area touched by the user's touch on the touch screen (120) of the portable device (100),
if the user' touch is successive touch inputs, send a signal for controlling the external device (200), wherein the signal comprises information of a direction of the successive touch inputs with respect to the user.

2. The portable device according to claim 1, wherein the successive touch inputs comprises a touch start and a touch termination, a distance between a first position of the touch start and a second position of the touch termination of the successive touch inputs is longer than a predetermined distance range.

3. The portable device according to claim 1, wherein the direction of the successive touch inputs with respect to the user are same regardless of whether the touch screen (120) of portable device (100) is in a portrait orientation or a landscape orientation.

4. The portable device according to claim 3, wherein the direction of the successive touch inputs with respect to the user comprises one of up, down, left and right directions.

5. The portable device according to claim 3, further comprising a gyroscope sensor, and
wherein the controller generates the signal comprising the information of the direction of the successive touch inputs with respect to the use using a direction of the portable device (100) sensed by the gyroscope sensor and values the detected successive touch inputs.

6. The portable device according to claim 1, wherein the signal for controlling the external device (200) comprises a control signal corresponding to one among a channel change, a volume control and a menu selection of the external device comprising a broadcasting receiver (200).

7. A method of controlling a portable device, comprising:
detecting user's touch through a touch screen which displays a user interface, UI;
if the user' touch is static touch inputs, performing (S13) an operation for the UI at an area touched by the user's touch on the touch screen (120) of the portable device (100);
if the user' touch is successive touch inputs, sending (S14) to an external device (200) a signal for controlling the external device (200), wherein the signal comprises information of a direction of the successive touch inputs with respect to the user.

8. The method according to claim 7, wherein the successive touch inputs comprises a touch start and a touch termination, a distance between a first position of the touch start and a second position of the touch termination of the successive touch inputs is longer than a predetermined distance range.

9. The method according to claim 7, wherein the direction of the successive touch inputs with respect to the user are same regardless of whether the touch screen (120) of portable device (100) is in a portrait orientation or a landscape orientation.

10. The method according to claim 9, wherein the direction of the successive touch inputs with respect to the user comprises one of up, down, left and right directions.

11. The method according to claim 9, further comprising generating the signal comprising the information of the direction of the successive touch inputs with respect to the use using a direction of the portable device (100) sensed by a gyroscope sensor and values the detected successive touch inputs.

12. The method according to claim 7, wherein the signal for controlling the external device (200) comprises a control signal corresponding to one among a channel change, a volume control and a menu selection of the external device comprising a broadcasting receiver (200).
